# EUROPÄISCHE PATENTANMELDUNG

(11) **EP 4 382 235 A1**
(43) Veröffentlichungstag der Anmeldung: **12.06.2024**
(21) Anmeldenummer: 23210653.4
(22) Anmeldetag: 17.11.2023
(51) Int. Cl.: B23H 1/10, B23H 9/14

(54) **DRUCKKAMMER FÜR EINE FUNKENERODIERMASCHINE UND VERWENDUNG DER DRUCKKAMMER ALS BESTANDTEIL EINER FUNKENERODIERMASCHINE**

(30) Priorität: 24.11.2022 DE 102022131120
(71) Anmelder: Andreas Maier GmbH & Co. KG, 70734 Fellbach (DE)
(72) Erfinder: Trebes, Herbert, 73614 Schorndorf (DE); Zentini, Giancarlo, 72631 Aichtal (DE); Streckenbach, Jan, 14052 Berlin (DE); Uhlmann, Eckart, 25368 Kiebitzreihe (DE); Polte, Julian, 13509 Berlin (DE); Osmannovic, Mirsad, 13053 Berlin (DE)
(74) Vertreter: Hoeger, Stellrecht & Partner Patentanwälte mbB

(57) **Zusammenfassung**

Um eine funkenerosive Behandlung eines Werkstücks so zu verbessern, dass die Nachteile des klassischen funkenerosiven Bohrens ganz oder teilweise vermieden oder zumindest vermindert werden, wird eine Druckkammer für eine Funkenerodiermaschine zur Durchführung einer funkenerosiven Behandlung an einem Werkstück vorgeschlagen, wobei die Druckkammer Folgendes umfasst:
- eine Wandung, welche einen Innenraum der Druckkammer begrenzt;
- mindestens eine Elektrodenführung zur Führung einer Elektrode parallel zu einer Längsachse der Druckkammer;
- einen Dielektrikumanschluss zum Zuführen eines Dielektrikums zu dem Innenraum der Druckkammer; und
- eine Dichtung, welche an eine quer zur Längsachse der Druckkammer ausgerichtete Anlagefläche des zu behandelnden Werkstücks fluiddicht anlegbar ist.

## Beschreibung

Die vorliegende Erfindung betrifft eine Druckkammer für eine Funkenerodiermaschine zur Durchführung einer funkenerosiven Behandlung an einem Werkstück.

Die Funkenerosion ist ein abtragendes Fertigungsverfahren, das vorzugsweise bei nicht oder nur schwer zerspanbaren Werkstoffen zum Einsatz kommt.

Beim funkenerosiven Bohren wird eine hohle Elektrode an ein Werkstück herangeführt, welches aus einem Material gebildet ist, das eine elektrische Mindestleitfähigkeit κ von mehr als 0,01 S/cm aufweist.

Durch die Elektrode hindurch wird dem Bereich zwischen der Elektrode und dem Werkstück ein Dielektrikum zugeführt.

Die Elektrode einerseits und das Werkstück andererseits sind an verschiedene Pole eines elektrischen Impulsgenerators angeschlossen. Der Impulsgenerator erzeugt Spannungspulse, deren Amplitude ausreichend hoch ist, um eine Funkenentladung in dem Dielektrikum zwischen der Elektrode und dem zu behandelnden Werkstück auszulösen.

Durch diese Funkenentladung werden Partikel von der Oberfläche des Werkstücks abgetragen und zusammen mit dem Dielektrikum aus dem Bereich zwischen der Elektrode und dem Werkstück abgeführt.

Während des Abtragvorgangs wird die Elektrode in das Werkstück hinein nachgeführt, um auf diese Weise eine funkenerosiv hergestellte Bohrung von gewünschter Tiefe zu erzeugen.

Das vorstehend beschriebene, klassische funkenerosive Bohren weist die folgenden Nachteile auf:
- Die von dem Werkstück abgetragenen Partikel werden durch den Zwischenraum zwischen einer Umfangsfläche der Elektrode und einer Seitenwand der Bohrung abtransportiert, wodurch es in diesem Zwischenraum zu Sekundärentladungen kommen kann. Diese Sekundärentladungen führen zu Prozessinstabilitäten.
- Die funkenerosive hergestellte Bohrung weist eine Konizität auf, das heißt die Bohrung erweitert sich vom Bohrungsgrund bis zur Mündungsöffnung der Bohrung an der Außenfläche des Werkstücks.
- Für die Herstellung einer Bohrung mit gewünschter Tiefe ist eine relativ lange Prozesszeit erforderlich.
- Der Verschleiß der Elektrode variiert während des Erosionsprozesses.

Der vorliegenden Erfindung liegt die Aufgabe zugrunde, eine funkenerosive Behandlung eines Werkstücks so zu verbessern, dass die Nachteile des klassischen funkenerosiven Bohrens ganz oder teilweise vermieden oder zumindest vermindert werden.

Diese Aufgabe wird erfindungsgemäß gelöst durch eine Druckkammer für eine Funkenerodiermaschine zur Durchführung einer funkenerosiven Behandlung an einem Werkstück, wobei die Druckkammer Folgendes umfasst:
- eine Wandung, welche einen Innenraum der Druckkammer begrenzt;
- mindestens eine Elektrodenführung zur Führung einer Elektrode parallel zu einer Längsachse der Druckkammer;
- einen Dielektrikumanschluss zum Zuführen eines Dielektrikums zu dem Innenraum der Druckkammer; und
- eine Dichtung, welche an eine quer zur Längsachse der Druckkammer ausgerichtete Anlagefläche des zu behandelnden Werkstücks fluiddicht anlegbar ist.

Durch die Verwendung einer solchen Druckkammer als Bestandteil einer Funkenerodiermaschine ist es möglich, den Funkenerosionsprozess als ein funkenerosives Bohren mit inverser Druckspülung durchzuführen.

Hierbei wird das Dielektrikum dem Bereich zwischen der Elektrode und dem zu behandelnden Werkstück nicht durch den Hohlraum der Elektrode zugeführt, sondern durch den Dielektrikumanschluss der Druckkammer und den Innenraum der Druckkammer, während das Dielektrikum durch den Hohlraum der Elektrode abgeführt wird.

Auf diese Weise kann der von dem Dielektrikum zu durchspülende Dielektrikumsraum klein gehalten werden, und das Dielektrikum kann im Dielektrikumsraum unter einem gegenüber dem Umgebungsdruck erhöhten Betriebsdruck zugeführt werden.

Beispielsweise kann der Druck, unter welchem das Dielektrikum dem Dielektrikumsraum zugeführt wird, mindestens 4 bar betragen, insbesondere mindestens 6 bar, besonders bevorzugt mindestens 8 bar.

Durch die vorstehend beschriebene Verfahrensführung können vorzugsweise die folgenden Vorteile erzielt werden:
- Die von dem Werkstück durch die Funkenentladung abgetragenen Partikel werden nicht durch den Zwischenraum zwischen der Umfangsfläche der Elektrode und der Seitenwand der funkenerosiv hergestellten Bohrung abtransportiert, sondern durch den Hohlraum der Elektrode.
- Sekundärentladungen zwischen der Umfangsfläche der Elektrode und der Seitenwand der Bohrung des Werkstücks werden unterbunden.
- Der Funkenerosionsprozess läuft ohne Instabilitäten ab.
- Die funkenerosiv hergestellte Bohrung weist keine Konizität oder nur eine sehr geringe Konizität auf; das heißt, die Seitenwand der funkenerosiv hergestellten Bohrung verläuft im Wesentlichen parallel zu der Umfangsfläche der Elektrode.
- Die zum Erreichen einer vorgegebenen Tiefe der funkenerosiv hergestellten Bohrung benötigte Erosionsprozess-Zeit wird deutlich reduziert, beispielsweise auf die Hälfte gegenüber der beim klassischen funkenerosiven Bohren benötigten Zeit.
- Der Verschleiß der Elektrode während des Funkenerosionsprozesses wird vergleichmäßigt und ist vorzugsweise unabhängig von der bereits erreichten Tiefe der funkenerosiv hergestellten Bohrung.

Die erfindungsgemäße Druckkammer kann bei einer bereits bestehenden Funkenerodiermaschine nachgerüstet werden.

Sie eignet sich insbesondere zur Einbringung von präzisen funkenerosiv hergestellten Bohrungen mit einem Durchmesser von beispielsweise ungefähr 0,5 mm bis 2,0 mm.

Bei einer bevorzugten Ausgestaltung der Erfindung ist vorgesehen, dass die Dichtung der Druckkammer ein elastomeres Dichtelement zum Anschmiegen an die Anlagefläche des zu behandelnden Werkstücks umfasst.

Auf diese Weise kann mittels der Dichtung der Druckkammer eine zuverlässige fluiddichte Abdichtung an der Anlagefläche des zu behandelnden Werkstücks auch dann erzielt werden, wenn diese Anlagefläche nicht eben, sondern beispielsweise konvex oder konkav gekrümmt ausgebildet ist.

Ferner ist es günstig, wenn die Dichtung der Druckkammer so ausgebildet ist, dass sie sich an eine Anlagefläche des zu behandelnden Werkstücks anschmiegen kann, welche gegenüber einer zur Längsachse der Druckkammer senkrecht ausgerichteten Ebene um einen Winkel α geneigt ist.

Dabei beträgt der zulässige Neigungswinkel α vorzugsweise mindestens 10°, insbesondere mindestens 20°, besonders bevorzugt mindestens 30°.

Um eine Anpassung der Dichtung der Druckkammer an eine solche geneigte Anlagefläche des zu behandelnden Werkstücks zu ermöglichen, kann beispielsweise vorgesehen sein, dass die Druckkammer mindestens ein Kugelgelenk umfasst.

Dabei ist es besonders günstig, wenn die Druckkammer mindestens zwei Kugelgelenke, nämlich ein erstes Kugelgelenk und ein zweites Kugelgelenk, umfasst.

Alternativ oder ergänzend hierzu kann vorgesehen sein, dass die Drucckammer einen Faltenbalg umfasst.

Dabei kann insbesondere vorgesehen sein, dass der Faltenbalg eine Außenwand und eine Innenwand und einen die Außenwand und die Innenwand miteinander verbindenden Abdichtbereich umfasst, wobei der Faltenbalg mit dem Abdichtbereich an die Anlagefläche des zu behandelnden Werkstücks fluiddicht anlegbar ist.

Die Dichtung der Druckkammer kann mindestens ein Andrückelement umfassen, mittels welchem ein Abdichtbereich der Dichtung der Druckkammer gegen die Anlagefläche des zu behandelnden Werkstücks drückbar ist.

Bei einer bevorzugten Ausgestaltung der Erfindung ist vorgesehen, dass die Dichtung mehrere Andrückelemente, insbesondere mindestens drei Andrückelemente, besonders bevorzugt mindestens vier Andrückelemente, umfasst, mittels welchen ein Abdichtbereich der Dichtung gegen die Anlagefläche des zu behandelnden Werkstücks drückbar ist.

Je höher die Anzahl der Andrückelemente ist, umso besser kann die Dichtung der Druckkammer mittels der Andrückelemente an die Form der (beispielsweise als Freiformfläche ausgebildeten) Anlagefläche des zu behandelnden Werkstücks angepasst werden.

Um eine ausreichende Andrückkraft zu erzielen, mittels welcher das mindestens eine Andrückelement gegen den Abdichtbereich des Dichtelements drückt, ist es günstig, wenn die Druckkammer mindestens ein elastisches Vorspannelement zum Vorspannen des mindestens einen Andrückelements gegen den Abdichtbereich umfasst.

Wenn die Druckkammer mehrere Andrückelemente umfasst, so ist vorzugsweise für jedes der Andrückelemente jeweils ein elastisches Vorspannelement zum Vorspannen des betreffenden Andrückelements gegen den Abdichtbereich der Dichtung der Druckkammer vorgesehen.

Um das Dielektrikum durch die Druckkammer dem Bereich vor der Spitze der Elektrode zuführen zu können, ist es von Vorteil, wenn mindestens eine der mindestens einen Elektrodenführung mindestens einen Durchtrittskanal für den Durchtritt des Dielektrikums durch die betreffende Elektrodenführung aufweist.

Bei bevorzugten Ausgestaltungen der erfindungsgemäßen Druckkammer ist vorgesehen, dass die Druckkammer mindestens zwei Elektrodenführungen umfasst, beispielsweise eine maschinenseitige Elektrodenführung und eine werkstückseitige Elektrodenführung.

In diesem Fall ist es besonders günstig, wenn zumindest die werkstückseitige Elektrodenführung mindestens einen Durchtrittskanal für den Durchtritt des Dielektrikums durch die werkstückseitige Elektrodenführung aufweist.

Der mindestens eine Durchtrittskanal für den Durchtritt des Dielektrikums durch die Elektrodenführung ist vorzugsweise im Wesentlichen parallel zu der Längsachse der Druckkammer ausgerichtet.

Um eine elektrische Isolation zwischen der durch die Druckkammer hindurchgeführten Elektrode einerseits und der Wandung der Druckkammer andererseits bereitzustellen, ist es günstig, wenn mindestens eine der mindestens einen Elektrodenführung der Druckkammer aus einem elektrisch nicht leitenden Material gebildet ist. Das elektrisch nicht leitende Material kann beispielsweise ein Keramikmaterial, ein Kunststoffmaterial und/oder ein mit einer elektrisch nicht leitenden Beschichtung versehenes metallisches Material, vorzugsweise ein Stahlmaterial, umfassen. Vorzugsweise kann das elektrisch nicht leitende Material aus einem Keramikmaterial, aus einem Kunststoffmaterial oder aus einem mit einer elektrisch nicht leitenden Beschichtung versehenen metallischen Material, besonders bevorzugt einem Stahlmaterial, bestehen.

Um ein unerwünschtes Entweichen von Dielektrikum aus dem Innenraum der Druckkammer zu vermeiden, ist es günstig, wenn mindestens eine der mindestens einen Elektrodenführung der Druckkammer fluiddicht ausgebildet ist.

Wenn die Druckkammer eine maschinenseitige Elektrodenführung und eine werkstückseitige Elektrodenführung umfasst, so ist vorzugsweise die maschinenseitige Elektrodenführung der Druckkammer fluiddicht ausgebildet.

Die Wandung der Druckkammer kann ein Kunststoffmaterial und/oder ein metallisches Material, insbesondere ein Aluminiummaterial und/oder ein Stahlmaterial, besonders bevorzugt ein beschichtetes Stahlmaterial und/oder ein Edelstahlmaterial, umfassen.

Ferner kann vorgesehen sein, dass die Wandung der Druckkammer zumindest abschnittsweise im Wesentlichen vollständig aus einem Kunststoffmaterial oder aus einem metallischen Material, insbesondere aus einem Aluminiummaterial oder aus einem Stahlmaterial, besonders bevorzugt aus einem beschichteten Stahlmaterial oder aus einem Edelstahlmaterial, gebildet ist.

Um die Druckkammer während des Funkenerodierprozesses relativ zu der Elektrode bewegen zu können, damit die Druckkammer ihre Position an der Anlagefläche des zu behandelnden Werkstücks beibehält, wenn die Elektrode immer weiter in das Innere des Werkstücks nachgeführt wird, ist es günstig, wenn die Druckkammer mindestens ein Führungselement zum verschieblichen Führen der Druckkammer längs einer Führungsrichtung an einer Führungsvorrichtung der Funkenerodiermaschine umfasst.

Dabei ist vorzugsweise die Führungsrichtung parallel zu der Längsachse der Druckkammer ausgerichtet.

Ferner umfasst die Funkenerodiermaschine vorzugsweise einen Antrieb für eine Bewegung der Druckkammer längs der Führungsrichtung relativ zu der Elektrode der Funkenerodiermaschine.

Die vorliegende Erfindung betrifft ferner die Verwendung einer erfindungsgemäßen Druckkammer als Bestandteil einer Funkenerodiermaschine, wobei eine hohle Elektrode sich durch den Innenraum der Druckkammer hindurch erstreckt und dem Innenraum der Druckkammer ein Dielektrikum zugeführt wird, welches bei einer funkenerosiven Behandlung eines Werkstücks verwendet wird.

Dabei ist vorzugsweise vorgesehen, dass das Dielektrikum durch die hohle Elektrode abgeführt wird.

Die Dichtung der erfindungsgemäßen Druckkammer kann sich vorzugsweise an eine Freiformoberfläche des zu behandelnden Werkstücks bis zu einem Neigungswinkel α von mindestens 10°, insbesondere von mindestens 20°, besonders bevorzugt von mindestens 30°, gegenüber einer zur Längsachse der Druckkammer senkrecht ausgerichteten Ebene anpassen.

Eine Anpassung der Ausrichtung der Dichtung der Druckkammer an die Ausrichtung der Anlagefläche des Werkstücks kann beispielsweise durch ein doppeltes Kugelgelenk erfolgen. In diesem Fall umfasst die Druckkammer vorzugsweise auch eine längs der Längsachse der Druckkammer federnd geführte werkstückseitige Elektrodenführung, durch welche die Elektrode hindurchgeführt ist.

Eine pulsierende Arbeitsbewegung der Maschinenspindel der Funkenerodiermaschine während des Funkenerosionsprozesses wird vorzugsweise durch einen Antrieb für die Druckkammer ausgeglichen, welcher die Druckkammer gegenläufig zu der Arbeitsbewegung der Maschinenspindel bewegt, wodurch die Dichtung der Druckkammer mit einer gleichbleibenden Abdichtkraft an einer Anlagefläche des zu behandelnden Werkstücks anliegt.

Ein solcher Antrieb kann beispielsweise einen elektrischen Stellmotor umfassen.

Die erfindungsgemäße Druckkammer umfasst vorzugsweise eine werkstückseitige Elektrodenführung, mittels welcher die Elektrode bis in die unmittelbare Nähe des zu behandelnden Werkstücks präzise geführt ist.

Die erfindungsgemäße Druckkammer weist eine kompakte, modulare Bauart auf, so dass die Adaption an unterschiedliche Funkenerodiermaschinen, insbesondere Senkerodiermaschinen, erleichtert wird.

Weitere Merkmale und Vorteile der Erfindung sind Gegenstand der nachfolgenden Beschreibung und der zeichnerischen Darstellung von Ausführungsbeispielen.

In den Zeichnungen zeigen:

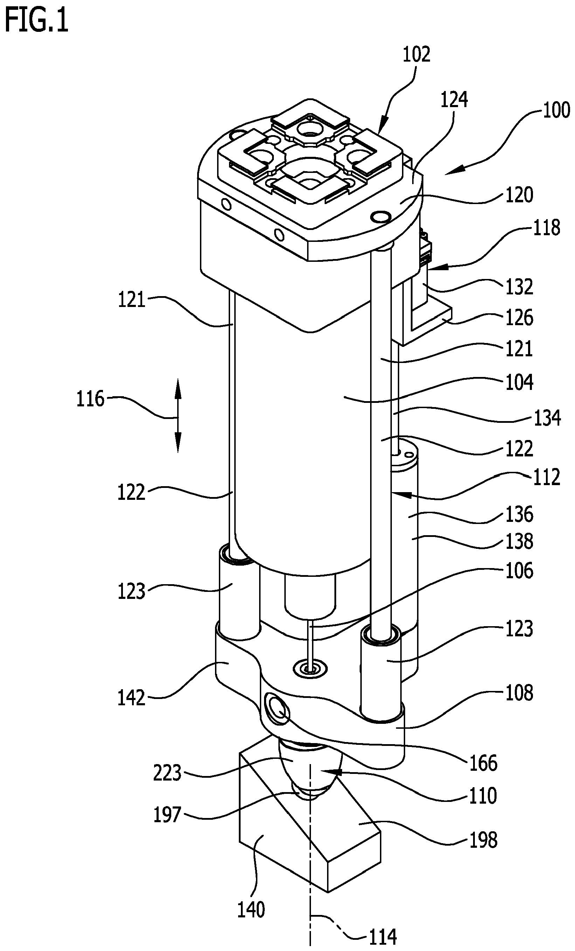

- Fig. 1: eine perspektivische Darstellung einer Funkenerodiereinheit, welche eine Druckkammer umfasst, wobei die Druckkammer eine Wandung, welche einen Innenraum der Druckkammer begrenzt, eine obere Elektrodenführung und eine untere Elektrodenführung zur Führung einer Erodierelektrode parallel zu einer Längsachse der Druckkammer, einen Dielektrikumanschluss zum Zuführen eines Dielektrikums zu dem Innenraum der Druckkammer und eine Dichtung, welche an eine quer zu der Längsachse der Drucckammer ausgerichtete Anlagefläche des funkenerosiv zu behandelnden Werkstücks fluiddicht anlegbar ist, umfasst, und wobei die Funkenerodiereinheit ferner eine Führungsvorrichtung zum verschieblichen Führen der Druckkammer längs einer parallel zu der Längsachse der Druckkammer ausgerichteten Führungsrichtung und einen Antrieb zum Antreiben einer Bewegung der Drucckammer längs der Führungsrichtung umfasst, wobei die Drucckammer mit ihrer Dichtung an einer schräg zur Längsachse der Druckkammer ausgerichteten Anlagefläche eines zu behandelnden Werkstücks anliegt;
- Fig. 2: eine Vorderansicht der Funkenerodiereinheit aus Fig. 1, wobei die Druckkammer mit ihrer Dichtung an der schräg zu der Längsachse der Druckkammer ausgerichteten Anlagefläche des zu behandelnden Werkstücks anliegt;
- Fig. 3: eine Ansicht der Funkenerodiereinheit und des zu behandelnden Werkstücks aus den Fig. 1 und 2 von hinten;
- Fig. 4: eine Seitenansicht der Funkenerodiereinheit und des zu behandelnden Werkstücks aus den Fig. 1 bis 3, mit der Blickrichtung in Richtung des Pfeiles 4 in Fig. 3;
- Fig. 5: einen Längsschnitt durch die Funkenerodiereinheit und das zu behandelnde Werkstück aus den Fig. 1 bis 4, längs der Linie 5 - 5 in Fig. 4;
- Fig. 6: eine Draufsicht auf die Funkenerodiereinheit aus den Fig. 1 bis 5 von oben, mit der Blickrichtung in Richtung des Pfeiles 6 in Fig. 3;
- Fig. 7: eine perspektivische Darstellung der Druckkammer aus den Fig. 1 bis 6;
- Fig. 8: eine Vorderansicht der Druckkammer aus Fig. 7;
- Fig. 9: einen Längsschnitt durch die Druckkammer aus Fig. 9, längs der Linie 9 - 9 in Fig. 8;
- Fig. 10: eine vergrößerte Darstellung des Bereichs I aus Fig. 9;
- Fig. 11: eine Ansicht der Druckkammer aus den Fig. 7 bis 10 von hinten;
- Fig. 12: eine Draufsicht auf die Druckkammer aus den Fig. 7 bis 11 von oben, mit der Blickrichtung in Richtung des Pfeiles 12 in Fig. 11;
- Fig. 13: eine Draufsicht auf die Druckkammer aus den Fig. 7 bis 12 von unten, mit der Blickrichtung in Richtung des Pfeiles 13 in Fig. 11;
- Fig. 14: eine perspektivische Darstellung einer zweiten Ausführungsform einer Druckkammer, welche statt eines doppelten Kugelgelenks einen gegen die Anlagefläche des Werkstücks vorspannbaren Faltenbalg umfasst;
- Fig. 15: eine Vorderansicht der an der Führungsvorrichtung der Funkenerodiereinheit gehaltenen Druckkammer aus Fig. 14, in einem Zustand, in welchem ein Abdichtbereich des Faltenbalgs der Drucckammer gegenüber einer zur Längsachse der Druckkammer senkrechten Ebene verkippt ist;
- Fig. 16: einen Längsschnitt durch die Druckkammer aus den Fig. 14 und 15, längs der Linie 16 - 16 in Fig. 15;
- Fig. 17: eine vergrößerte Darstellung des Bereichs II aus Fig. 16;
- Fig. 18: eine Seitenansicht der an der Führungsvorrichtung der Funkenerodiereinheit gehaltenen Druckkammer aus den Fig. 14 bis 17 in einem Zustand, in welchem eine Dichtfläche des Faltenbalgs der Druckkammer gegenüber einer zur Längsachse der Druckkammer senkrechten Ebene verkippt ist;
- Fig. 19: einen Längsschnitt durch die Druckkammer aus Fig. 18, längs der Linie 19 - 19 in Fig. 18;
- Fig. 20: eine Ansicht der Druckkammer aus den Fig. 14 bis 17 von hinten;
- Fig. 21: eine Draufsicht auf die Druckkammer aus den Fig. 14 bis 17 von oben, mit der Blickrichtung in Richtung des Pfeiles 21 in Fig. 20;
- Fig. 22: eine Draufsicht auf die Druckkammer aus den Fig. 14 bis 17 von unten, mit der Blickrichtung in Richtung des Pfeiles 22 in Fig. 20; und
- Fig. 23: eine schematische Darstellung eines Funkenerodiervorgangs mit inverser Druckspülung.

Gleiche oder funktional äquivalente Elemente sind in allen Figuren mit denselben Bezugszeichen bezeichnet.

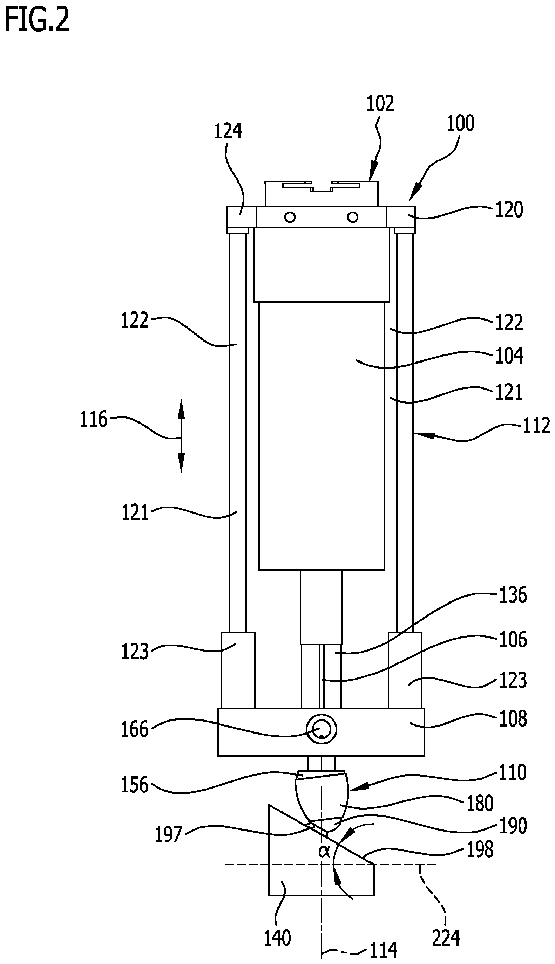

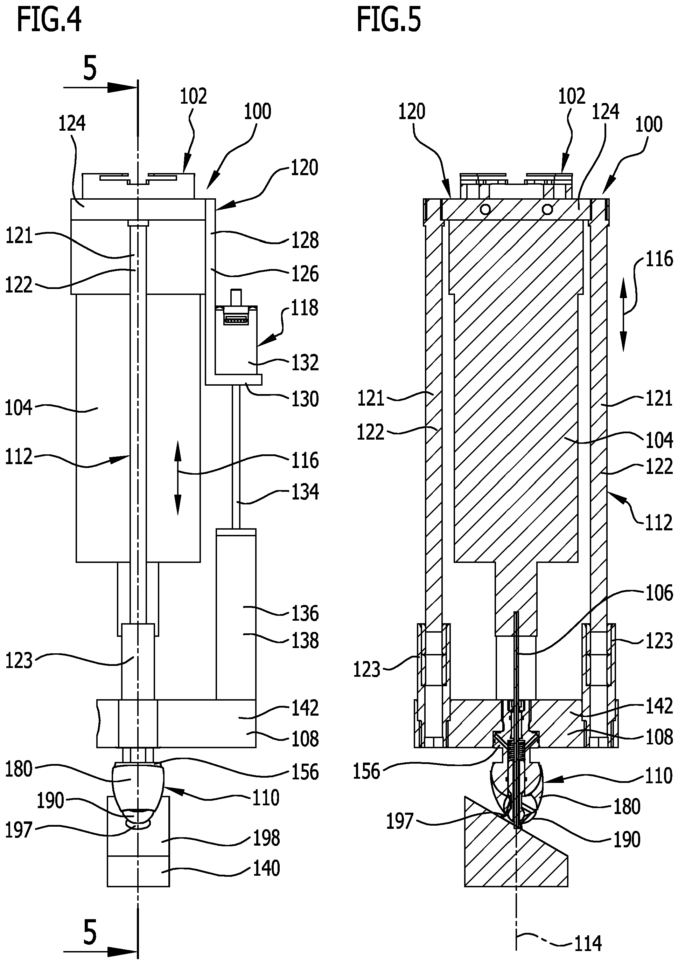

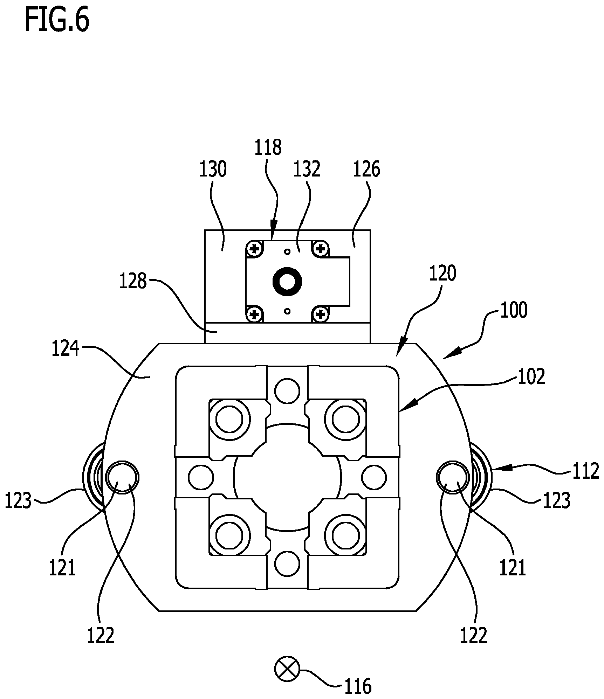

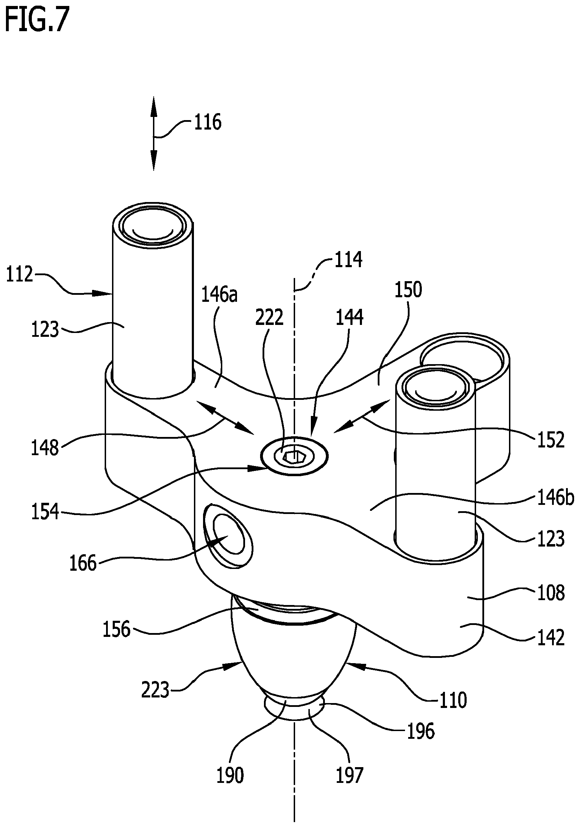

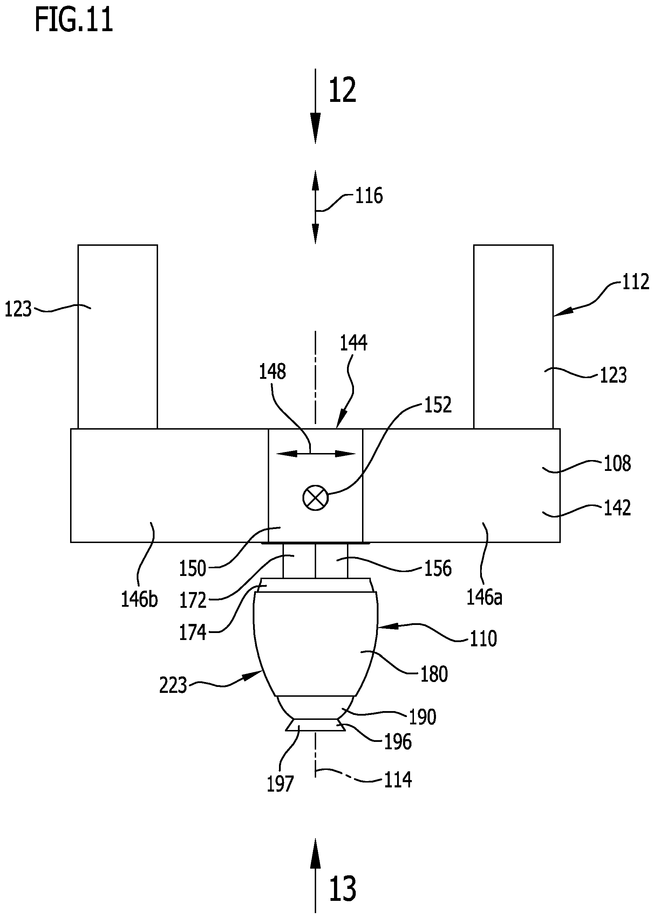

Eine in den Fig. 1 bis 13 dargestellte, als Ganzes mit 100 bezeichnete Funkenerodiermaschine umfasst eine Maschinenschnittstelle 102, mittels welcher die Funkenerodiermaschine 100 an eine Werkzeugmaschine ankoppelbar ist, eine fest mit einer Maschinenspindel 104 der Werkzeugmaschine verbundene Elektrode 106, eine Druckkammereinheit 108, welche eine Druckkammer 110 umfasst, eine Führungsvorrichtung 112 zum verschieblichen Führen der Druckkammer 110 längs einer parallel zu einer Längsachse 114 ausgerichteten Führungsrichtung 116, einen Antrieb 118 zum Antreiben einer Bewegung der Druckkammer 110 längs der Führungsrichtung 116 und ein zwischen der Maschinenschnittstelle 102 und der Maschinenspindel 104 angeordnetes Befestigungselement 120, welches die Führungsvorrichtung 112 und den Antrieb 118 für die Druckkammer 110 trägt.

Die Führungsvorrichtung 112 umfasst mehrere, im dargestellten Ausführungsbeispiel zwei, Führungselemente 121. Die Führungselemente 121 sind beispielweise als Führungssäulen 122 ausgebildet, welche an dem Befestigungselement 120 festgelegt sind und sich von dem Befestigungselement 120 der Führungsrichtung 116 in Richtung auf die Druckkammereinheit 108 erstrecken.

Die der Druckkammer 108 zugewandten Enden der Führungssäulen 122 stehen in Eingriff mit jeweils einer Führungshülse 123, welche an der Drucckammereinheit 108 festgelegt ist.

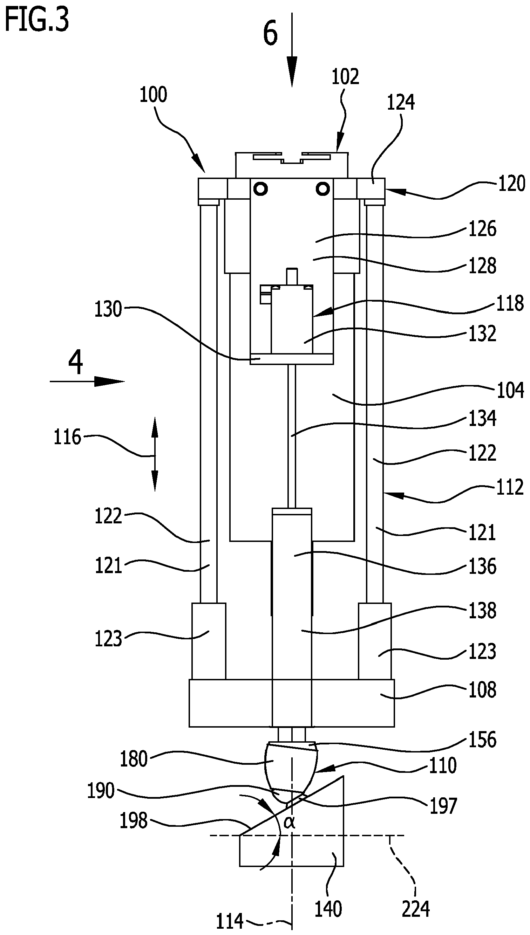

Wie am besten aus Fig. 3 zu ersehen ist, umfasst das Befestigungselement 120 beispielsweise eine sich senkrecht zur Führungsrichtung 116 erstreckende Befestigungsplatte 124 und einen an der Befestigungsplatte 124 festgelegten Befestigungswinkel 126.

Der Befestigungswinkel 126 umfasst einen ersten Schenkel 128, welcher an der Befestigungsplatte 124 festgelegt ist und sich längs der Führungsrichtung 116 in Richtung auf die Druckkammereinheit 108 erstreckt.

Der erste Schenkel 128 des Befestigungswinkels 126 endet an einem zweiten Schenkel 130 des Befestigungswinkels 126, welcher sich senkrecht zur Führungsrichtung 116 von dem ersten Schenkel 128 weg erstreckt und einen Stellmotor 132 des Antriebs 118 trägt.

Eine Antriebswelle 134 des Stellmotors 132 erstreckt sich durch eine Durchtrittsöffnung in dem zweiten Schenkel 130 des Befestigungswinkels 126 hindurch längs der Führungsrichtung 116 in eine Getriebeeinheit 136 des Antriebs 118 hinein.

Die Getriebeeinheit 136 sorgt dafür, dass die Druckkammereinheit 108 und damit die Druckkammer 110 längs der Führungsrichtung 116 linear bewegt wird, wenn der Stellmotor 132 die Antriebswelle 134 dreht.

Zu diesem Zweck kann beispielsweise die Antriebswelle 134 in einem innerhalb der Getriebeeinheit 136 angeordneten Abschnitt mit einem Außengewinde versehen sein, welches in ein hierzu komplementäres Innengewinde eingreift, das innerhalb eines Gehäuses 138 der Getriebeeinheit 136 festgelegt ist. Das Gehäuse 138 der Getriebeeinheit 136 ist drehfest mit der Druckkammereinheit 108 verbunden, so dass es sich nur linear längs der Führungsrichtung 116 bewegen kann, wenn die Antriebswelle 134 sich um deren Längsachse dreht.

Der Stellmotor 132 wird während eines Funkenerodiervorgangs so angesteuert, dass er eine Pulsierbewegung der Maschinenspindel 104, an welcher die Elektrode 106 angeordnet ist, längs der Führungsrichtung 116 ausgleicht, so dass die Druckkammer 110 sich zwar relativ zu dem Befestigungselement 120 und damit relativ zu der Maschinenspindel 104 und der Elektrode 106 bewegt, aber relativ zu einem zu behandelnden Werkstück 140 ortsfest bleibt.

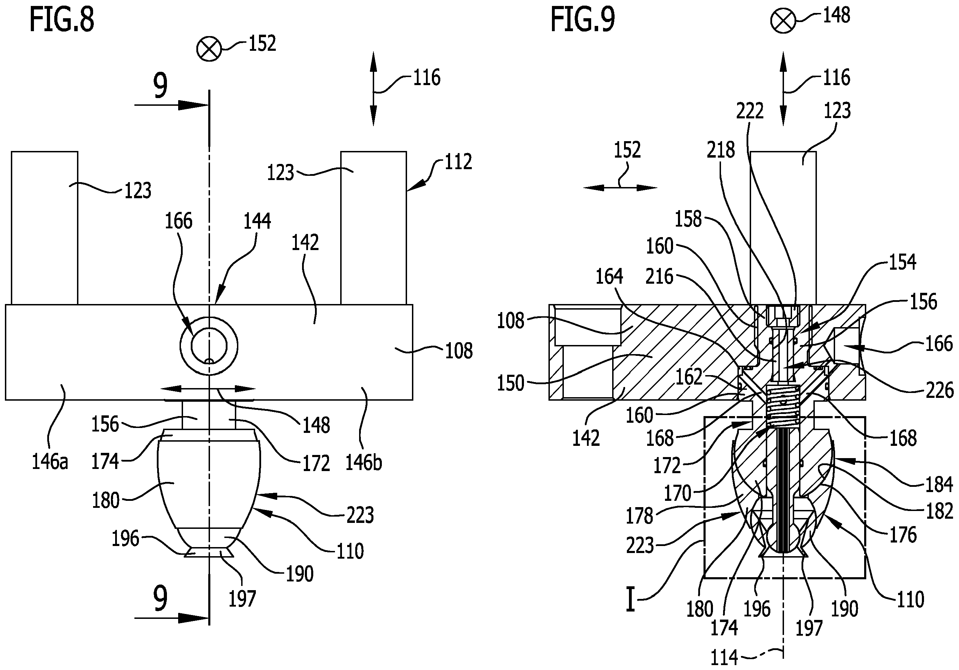

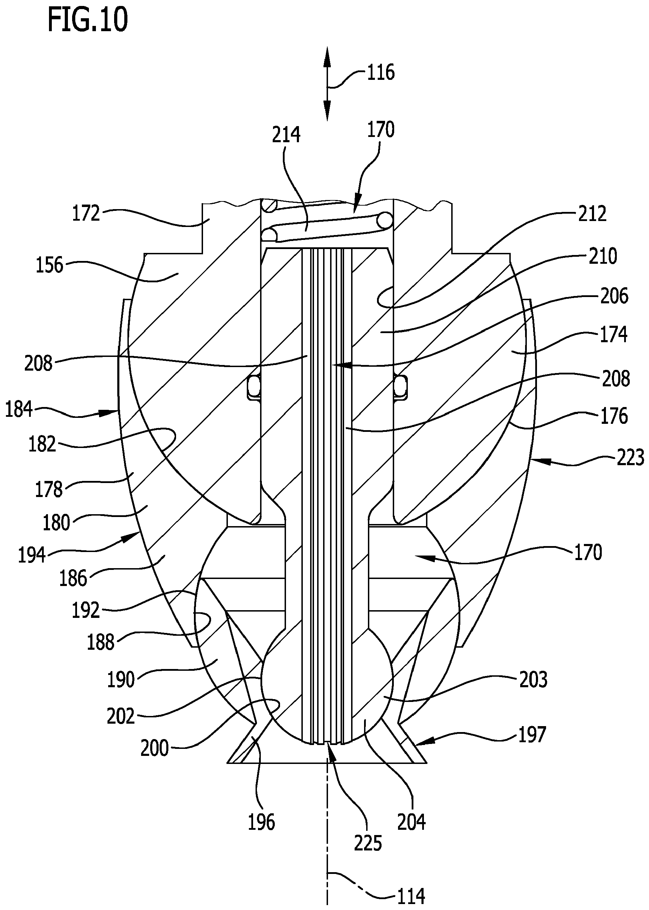

Details zum Aufbau der Druckkammereinheit 108 und der Druckkammer 110 sind am besten aus den Fig. 9 und 10 zu ersehen.

Die Druckkammereinheit 108 umfasst einen Grundkörper 142, an welchem die Führungshülsen 123, das Gehäuse 138 der Getriebeeinheit 136 und die Drucckammer 110 gehalten sind.

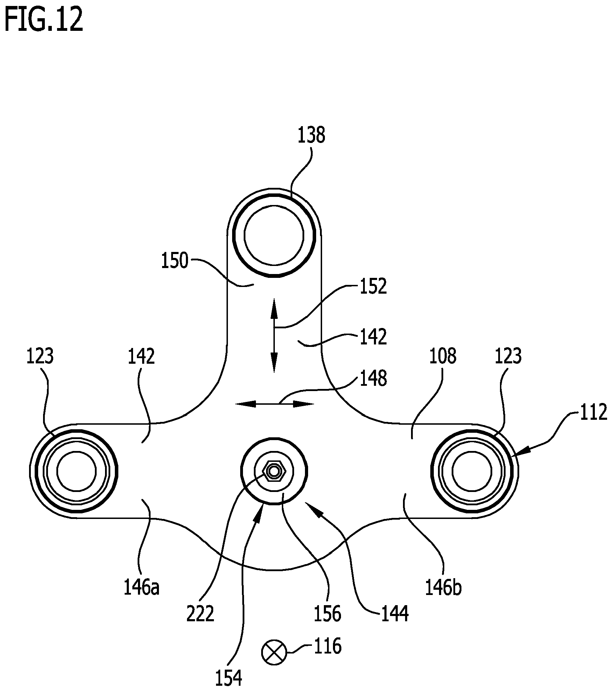

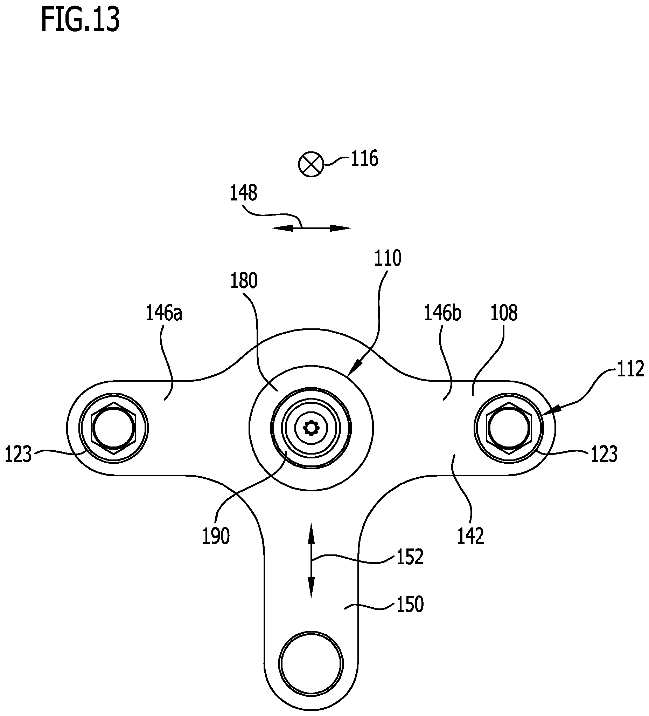

Wie am besten aus den Draufsichten der Fig. 12 und 13 zu ersehen ist, kann der Grundkörper 142 eine im Wesentlichen T-förmige Gestalt aufweisen, welche drei Schenkel aufweist, die sich von einem zentralen Bereich 144 des Grundkörpers 142 weg erstrecken.

Dabei erstrecken sich zwei Querschenkel 146a, 146b des Grundkörpers 142 längs einer Querrichtung 148 der Druckkammereinheit 108 diametral zueinander von dem zentralen Bereich 144 des Grundkörpers 142 weg.

An ihren Endbereichen tragen diese Querschenkel 146 die Führungshülsen 123.

Ein Längsschenkel 150 des Grundkörpers 142 erstreckt sich in einer Längsrichtung 152 von dem zentralen Bereich 144 des Grundkörpers 142 weg.

Ein Endbereich des Längsschenkels 150 des Grundkörpers 142 trägt das Gehäuse 138 der Getriebeeinheit 136.

Die Querrichtung 148 und die Längsrichtung 152 sind vorzugsweise senkrecht zueinander und senkrecht zu der Führungsrichtung 116 ausgerichtet.

In seinem zentralen Bereich 144 ist der Grundkörper 142 mit einer Durchtrittsbohrung 154 versehen, durch welche sich die an der Maschinenspindel 104 angeordnete Elektrode 106 hindurch erstreckt.

Wie am besten aus den Fig. 9 und 10 zu ersehen ist, ist in die Durchtrittsbohrung 154 ein Basisteil 156 der Druckkammer 110 eingesetzt.

Das Basisteil 156 umfasst einen Gewindeabschnitt 158, welcher ein Außengewinde 160 aufweist, das in ein hierzu komplementäres Innengewinde des Grundkörpers 142 der Druckkammereinheit 108 eingreift, so dass das Basisteil 156 der Druckkammer 110 formschlüssig an dem Grundkörper 142 gehalten ist.

Ferner umfasst das Basisteil 156 der Druckkammer 110 einen Ringbundabschnitt 162, welcher einen größeren Außendurchmesser aufweist als der Gewindeabschnitt 158 des Basisteils 156 und in einem entsprechend größer dimensionierten Abschnitt der gestuften Durchtrittsbohrung 154 des Grundkörpers 142 aufgenommen ist.

Der Ringbundabschnitt 162 ist an seinem äußeren Umfang mit einem Ringkanal 164 versehen, welcher ringförmig geschlossen um das Basisteil 156 der Druckkammer 110 umläuft und in Fluidverbindung steht mit einem Dielektrikumanschluss 166 des Grundkörpers 142, an welchen eine Dielektrikum-Zuleitung, beispielsweise in Form eines Schlauches, fluiddicht anschließbar ist.

Der Ringkanal 164 steht über mehrere Verbindungskanäle 168, von denen in Fig. 9 zwei dargestellt sind, in Fluidverbindung mit einem Innenraum 170 der Druckkammer 110, welcher im Betrieb der Funkenerodiermaschine 100 von der Elektrode 106 durchsetzt wird.

An den Ringbundabschnitt 162 des Basisteils 156 schließt sich ein durchmesserreduzierter Abschnitt 172 des Basisteils 156 an, und an den durchmesserreduzierten Abschnitt 172 schließt sich ein Kopfabschnitt 174 des Basisteils 156 an, welcher eine sphärisch gekrümmte Außenfläche 176 aufweist.

Der Kopfabschnitt 174 des Basisteils 156 der Druckkammer 110 ist teilweise von einem ersten Pfannenabschnitt 178 eines Zwischenteils 180 der Drucckammer 110 umschlossen, wobei dieser erste Pfannenabschnitt 178 eine sphärisch gekrümmte Innenfläche 182 aufweist, mit welcher der erste Pfannenabschnitt 178 des Zwischenteils 180 an der Außenfläche 176 des Kopfabschnitts 174 des Basisteils 156 abgleiten kann, so dass der Kopfabschnitt 154 des Basisteils 156 und der erste Pfannenabschnitt 178 des Zwischenteils 180 der Druckkammer 110 zusammen ein erstes Kugelgelenk 184 der Drucckammer 110 bilden.

Das Zwischenteil 180 der Druckkammer 110 umfasst ferner einen zweiten Pfannenabschnitt 186, welcher eine sphärisch gekrümmte Innenfläche 188 aufweist.

Der zweite Pfannenabschnitt 186 des Zwischenteils 180 der Druckkammer 110 umschließt teilweise ein Kopfteil 190 der Druckkammer 110, welches eine sphärisch gekrümmte Außenfläche 192 aufweist, die an der sphärisch gekrümmten Innenfläche 188 des zweiten Pfannenabschnitts 186 des Zwischenteils 180 der Druckkammer 110 abgleiten kann, so dass das Kopfteil 190 zusammen mit dem zweiten Pfannenabschnitt 186 des Zwischenteils 180 der Druckkammer 110 ein zweites Kugelgelenk 194 der Druckkammer 110 bildet.

An der Innenseite des Kopfteils 190 der Druckkammer 110 ist eine Dichtung 197 der Druckkammer 110 angeordnet. Die Dichtung 197 umfasst ein Dichtelement 196, welches aus einem flexiblen Material gebildet ist, so dass es sich an eine Anlagefläche 198 des zu behandelnden Werkstücks 140 anschmiegen kann, auch wenn diese Anlagefläche 198 schräg zu der Längsachse 114 der Druckkammer 110 ausgerichtet und/oder nicht eben ausgebildet ist.

Das Dichtelement 196 kann beispielsweise aus einem Elastomermaterial gebildet sein.

Das Dichtelement 196 weist eine sphärische Innenfläche 200 auf, mit welcher das Dichtelement 196 an einer sphärischen Außenfläche 202 eines Kopfabschnitts 203 einer werkstückseitigen Elektrodenführung 204 abgleiten kann.

Die werkstückseitige Elektrodenführung 204 weist eine mittige Durchtrittsbohrung 206 auf, durch welche sich im Betrieb der Funkenerodiermaschine 100 die Elektrode 106 hindurch erstreckt.

Ferner weist die werkstückseitige Elektrodenführung 204 mehrere parallel zur Längsachse 114 der Druckkammer 110 verlaufende Durchtrittskanäle 208 für den Durchtritt des Dielektrikums durch die werkstückseitige Elektrodenführung 204 auf, von denen in Fig. 10 zwei dargestellt sind.

Die Durchtrittskanäle 208 stehen in Fluidverbindung mit dem Innenraum 170 der Druckkammer 170, welcher wiederum in Fluidverbindung mit den Verbindungskanälen 168 zum Durchleiten des Dielektrikums steht.

Die werkstückseitige Elektrodenführung 204 umfasst ferner einen Führungsabschnitt 210, mit welchem die werkstückseitige Elektrodenführung 204 an einer Innenwand 212 des Basisteils 156 der Druckkammer 110 längs der Längsachse der Druckkammer 114 verschiebbar geführt ist.

Die Druckkammer 110 umfasst ferner ein Vorspannelement 214, welches sich einerseits an dem Basisteil 156 der Druckkammer 110 und andererseits an der werkstückseitigen Elektrodenführung 204 abstützt und die werkstückseitige Elektrodenführung 204 gegen das Dichtelement 196 der Dichtung 197 der Druckkammer 110 vorspannt.

Das Vorspannelement 214 kann beispielsweise als ein Federelement, insbesondere als eine Druck-Schraubenfeder, ausgebildet sein.

Ferner umfasst die Druckkammer 110 eine maschinenseitige Elektrodenführung 216, welche auf der dem zu behandelnden Werkstück 140 abgewandten Seite der Druckkammer 110 angeordnet ist und fluiddicht abdichtend an einer weiteren Innenfläche 218 des Basisteils 156 der Druckkammer 110 anliegt.

Auch diese maschinenseitige Elektrodenführung 216 weist eine mittige Durchtrittsbohrung 220 auf, durch welche sich im Betrieb der Funkenerodiermaschine 100 die Elektrode 106 hindurch erstreckt.

Die maschinenseitige Elektrodenführung 216 wird mittels eines Verschlusselements 222, welches mit einem Außengewinde in ein Innengewinde des Basisteils 156 der Druckkammer 110 eingreift und ein oberes Ende des Innenraums 170 der Druckkammer 110 verschließt, im Innenraum 170 der Druckkammer 110 zurückgehalten.

Das Basisteil 156 der Druckkammer 110 ist vorzugsweise aus einem Kunststoffmaterial oder aus einem metallischen Material, insbesondere aus einem Aluminiummaterial oder aus einem Stahlmaterial, besonders bevorzugt aus einem beschichteten Stahlmaterial oder aus einem Edelstahlmaterial, gebildet.

Das Zwischenteil 180 der Druckkammer 110 ist vorzugsweise aus einem Kunststoffmaterial oder aus einem metallischen Material, insbesondere aus einem Aluminiummaterial oder aus einem Stahlmaterial, besonders bevorzugt aus einem beschichteten Stahlmaterial oder aus einem Edelstahlmaterial, gebildet.

Die werkstückseitige Elektrodenführung 204 und/oder die maschinenseitige Elektrodenführung 216 sind vorzugsweise aus einem keramischen Material, aus einem Kunststoffmaterial und/oder aus einem mit einer elektrisch nicht leitenden Beschichtung versehenen metallischen Material, besonders bevorzugt einem beschichteten Stahlmaterial, gebildet.

Das Kopfteil 190 der Druckkammer 110 ist vorzugsweise aus einem keramischen Material, aus einem Kunststoffmaterial oder aus einem Aluminiummaterial gebildet.

Das Basisteil 156, das Zwischenteil 180 und das Kopfteil 190 bilden zusammen eine Wandung 223 der Druckkammer 110, welche den Innenraum 170 der Druckkammer 110 begrenzt.

Mittels der vorstehend beschriebenen Funkenerodiermaschine 100 wird eine funkenerosive Behandlung an dem zu behandelnden Werkstück 140 wie folgt durchgeführt:
Durch eine Bewegung der Maschinenspindel 104 längs der Längsachse 114 der Druckkammer 110 wird die Druckkammer 110 an das Werkstück 140 herangefahren.

Wenn die Anlagefläche 198 des Werkstücks 140 eben und senkrecht zu der Längsachse 114 der Druckkammer 110 ausgerichtet ist, bleiben alle Teile der Druckkammer 110, insbesondere das Zwischenteil 180 und das Kopfteil 190, in der in den Fig. 9 und 10 dargestellten Stellung, in welcher diese Teile der Druckkammer 110 koaxial mit der Längsachse 114 der Druckkammer 110 ausgerichtet sind.

Wenn aber die Anlagefläche 198 des Werkstücks 140 schräg zu der Längsachse 114 der Druckkammer 110 ausgerichtet ist und beispielsweise gegenüber einer zur Längsachse 114 der Druckkammer 110 senkrecht ausgerichteten Ebene 224 um einen Winkel α geneigt ist, wie in den Fig. 1 bis 5 dargestellt, dann beginnt das Kopfteil 190 der Druckkammer 110 sich gegenüber der Längsachse 114 der Druckkammer 110 zu verkippen, sobald das Dichtelement 196 in Kontakt mit der Anlagefläche 198 gelangt, und das Zwischenteil 180 verkippt sich in der entgegengesetzten Richtung gegenüber der Längsachse 114 der Druckkammer 110, bis das Dichtelement 196 fluiddicht abdichtend an der Anlagefläche 198 des Werkstücks 140 anliegt.

Auf diese Weise wird ein mit dem Dielektrikum befüllbarer abgeschlossener Dielektrikumsraum 226 geschaffen, welcher den Innenraum 170 der Drucckammer 110 umfasst und zunächst an der Oberfläche des Werkstücks 140 endet.

Wenn der Dielektrikumsraum 226 auf diese Weise geschlossen ist, wird eine Strömung des Dielektrikums durch diesen Dielektrikumsraum 226 erzeugt.

Das Dielektrikum ist ein fluides Medium, vorzugsweise eine Flüssigkeit.

Insbesondere kann ein Öl oder Wasser als Dielektrikum verwendet werden.

Das fluide Dielektrikum wird dem Dielektrikumsraum 226 unter einem gegenüber dem Umgebungsdruck erhöhten Druck zugeführt.

Dieser Druck beträgt vorzugsweise mehr als 4 bar, besonders bevorzugt mehr als 6 bar, beispielsweise ungefähr 8 bar.

Das Dielektrikum wird dem Innenraum 170 der Druckkammer 110 von einem Reservoir, in dem unter Druck stehendes Dielektrikum bevorratet wird, durch eine Dielektrikum-Zuführleitung, welche an den Dielektrikumanschluss 166 der Druckkammereinheit 108 angeschlossen ist, und von dort durch die (nicht dargestellte) Fluidverbindung zwischen dem Dielektrikumanschluss 166 und dem Ringkanal 164, durch den Ringkanal 164 und durch die Verbindungskanäle 168 zugeführt.

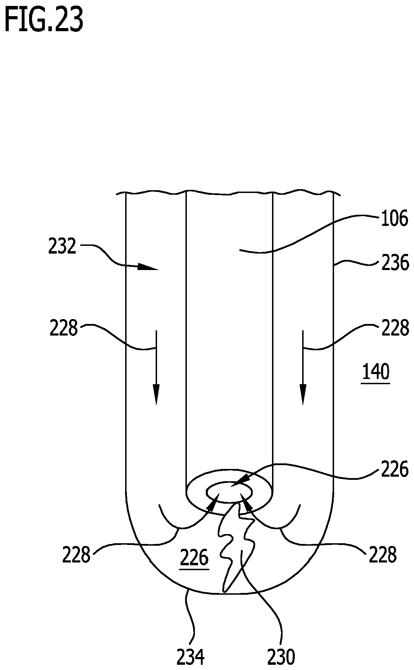

Die Elektrode 106 ist als ein hohlzylindrischer Stab ausgeführt, durch dessen mittigen Hohlraum 225 das in den Dielektrikumsraum 226 gelangte Dielektrikum wieder aus dem Dielektrikumsraum 226 austreten kann (siehe Fig. 23).

Die Strömungsrichtung des Dielektrikums im Dielektrikumsraum 226 ist in Fig. 23 durch die mit 228 bezeichneten Pfeile dargestellt.

Die funkenerosive Behandlung des Werkstücks 140 beginnt, wenn die Elektrode 106 und das zu behandelnde Werkstück 140 mittels eines (nicht dargestellten) elektrischen Implusgenerators mit einer gepulsten Spannung beaufschlagt werden.

Dabei sind die Elektrode 106 einerseits und das Werkstück 140 andererseits an die einander entgegengesetzten Pole des Impulsgenerators angeschlossen, so dass die von dem Impulsgenerator erzeugte pulsierende Spannung zwischen der Elektrode 106 einerseits und dem Werkstück 140 andererseits anliegt.

Da diese Spannung über der Durchschlagspannung des Dielektrikums liegt, wird in dem Dielektrikum eine Primärentladung 230 erzeugt, durch welche kleine Partikel des Werkstücks 140 abgetragen und mit dem Dielektrikum aus dem Dielektrikumsraum 226 ausgetragen werden.

Die Funkenerosion ist somit ein abtragendes Fertigungsverfahren.

Das funkenerosive Verfahren wird vorzugsweise bei nicht oder bei nur schwer zerspanbaren Werkstoffen eingesetzt.

Die für das funkenerosive Verfahren benötigte elektrische Mindestleitfähigkeit des Materials des Werkstücks 140 liegt beispielsweise bei κ > 0,01 S/cm.

Die Elektrode 106, welche durch die maschinenseitige Elektrodenführung 216 und die werkstückseitige Elektrodenführung 204 hindurchgeführt ist, wird während des Erodierprozesses pulsierend in das Innere des Werkstücks 140, welches kontinuierlich abgetragen wird, vorgeschoben.

Auf diese Weise wird, von der Anlagefläche 198 des Werkstücks 140 ausgehend, an dem Werkstück eine Ausnehmung oder Bohrung 232 ausgebildet, in welche sich die Elektrode 106 hinein erstreckt und welche gegenüber der Umgebung durch die Druckkammer 110, insbesondere die Dichtung 197 der Druckkammer 110, fluiddicht abgedichtet ist.

Die pulsierende lineare Bewegung der Elektrode 106, welche mittels der Maschinenspindel 104 erzeugt wird, wird von dem Antrieb 118 der Führungsvorrichtung 112 für die Druckkammer 110 ausgeglichen.

Dies bedeutet, dass der Stellmotor 132 des Antriebs 118 so betätigt wird, dass über die Getriebeeinheit 136 die Druckkammereinheit 108 und damit die Druckkammer 110 relativ zu der Elektrode 106 und der Maschinenspindel 104 längs der Führungsrichtung 116 in Richtung auf das Befestigungselement 120 zu bewegt wird.

Obwohl sich die Elektrode 106 immer weiter in das Werkstück 140 hinein bewegt, verbleibt die Druckkammer 110 daher in ihrer Ausgangsposition am Werkstück 140, so dass die Anpresskraft, mit welcher die Druckkammer 110 an die Anlagefläche 198 des Werkstücks 140 gepresst wird, während des Funkenerodiervorgangs im Wesentlichen konstant bleibt und eine fluiddichte Abdichtung an dem Dichtelement 196 der Dichtung 197 gewährleistet ist.

Die Pulsierbewegung der Maschinenspindel 104 wird somit von dem Stellmotor 132 des Antriebs 118 ausgeglichen.

Beim klassischen funkenerosiven Bohren wird der gesamte Arbeitsraum, in dem die Elektrode 106 und das Werkstück 140 angeordnet sind, mit dem Dielektrikum befüllt.

Das Dielektrikum tritt durch die hohle Elektrode 106 in die Bohrung 232 ein und durch den Zwischenraum zwischen der äußeren Umfangsfläche der Elektrode 106 und der Umfangswand 236 der Bohrung 232 in den Außenraum des Werkstücks 140 aus.

Bei dem vorstehend beschriebenen und in Fig. 23 schematisch dargestellten Funkenerosionsprozess werden hingegen nur die Bohrung 232 und der Innenraum 170 der Druckkammer mit dem Dielektrikum befüllt.

Die Strömung des Dielektrikums verläuft aus dem Innenraum 170 der Drucckammer 110 durch den Zwischenraum zwischen der äußeren Umfangsfläche der Elektrode 106 und der Umfangswand 236 der Bohrung 232 bis zur Spitze der Elektrode 106 und von dort in den Hohlraum 225 der Elektrode 106.

Da bei diesem Funkenerosionsprozess die Strömungsrichtung des Dielektrikums gegenüber dem klassischen Funkenerosionsprozess gerade umgekehrt ist, wird dieser Funkenerosionsprozess auch als funkenerosives Bohren mit inverser Druckspülung bezeichnet.

Beim klassischen funkenerosiven Bohren treten insbesondere die folgenden Probleme auf:
- Die durch die Funkenentladung von dem Werkstück 140 abgetragenen Partikel müssen über den Spalt zwischen der Außenfläche der Elektrode 106 und der Umfangswand 236 der Bohrung 232 abgeführt werden.
- Hierdurch kommt es zu Sekundärentladungen zwischen der Außenfläche der Elektrode 106 und der Umfangswand 236 der Bohrung 232, welche zu Prozessinstabilitäten führen können.
- Die durch die Funkenerosion geschaffene Bohrung 232 weist eine hohe Konizität auf, das heißt die Bohrung erweitert sich konisch vom Bohrungsgrund 234 bis zu der Anlagefläche 198 des Werkstücks 140, an welcher die Bohrung 232 mündet.
- Die zur Erzeugung einer Bohrung mit einer gewünschten Tiefe erforderliche Prozesszeit ist vergleichsweise lang.

Das funkenerosive Bohren mit inverser Druckspülung bietet demgegenüber die folgenden Vorteile:
- Die abgetragenen Partikel werden durch den Hohlraum 225 der Elektrode 106 aus der Bohrung 232 ausgespült.
- Es wird nur die Primärentladung 230 zwischen der Spitze der Elektrode 106 und dem Bohrungsgrund 234 der Bohrung 232 erzeugt; Sekundärentladungen zwischen der Umfangsfläche der Elektrode 106 und der Umfangswand 236 der Bohrung 232 werden vermieden.
- Die Bohrung 232 weist eine nur geringe Konizität oder gar keine Konizität auf.
- Die für die Erreichung einer vorgegebenen Tiefe der Bohrung 232 benötigte Erosionsdauer wird gegenüber dem klassischen funkenerosiven Bohren deutlich reduziert, in der Größenordnung von 50 %.
- Der Verschleiß der Elektrode 106 ist im Wesentlichen unabhängig von der Tiefe der Bohrung 232 und somit während des Erodierprozesses nahezu konstant.

Der Winkel α, unter welchem die Anlagefläche 198 des Werkstücks 140 gegenüber der zur Längsachse 114 der Druckkammer 110 senkrechten Ebene 224 geneigt ist, kann aufgrund der sich selbst justierenden Anpassung der Drucckammer 110 an die Anlagefläche 198 des Werkstücks 140 mittels des ersten Kugelgelenks 184 und des zweiten Kugelgelenks 194 mehr als 20°, insbesondere mehr als 25°, besonders bevorzugt mindestens 30°, betragen.

Auch wenn die Anlagefläche 198 des Werkstücks 140 nicht eben, sondern konkav oder konvex gewölbt sein sollte, ist dennoch eine fluiddichte Abdichtung des Dielektrikumsraums 226 mittels der Dichtung 197 der Druckkammer 110 möglich, weil das aus einem elastomeren Material gebildete Dichtelement 196 so flexibel ist, dass es sich an eine unebene Anlagefläche 198 des Werkstücks 140 fluiddicht abdichtend anschmiegen kann.

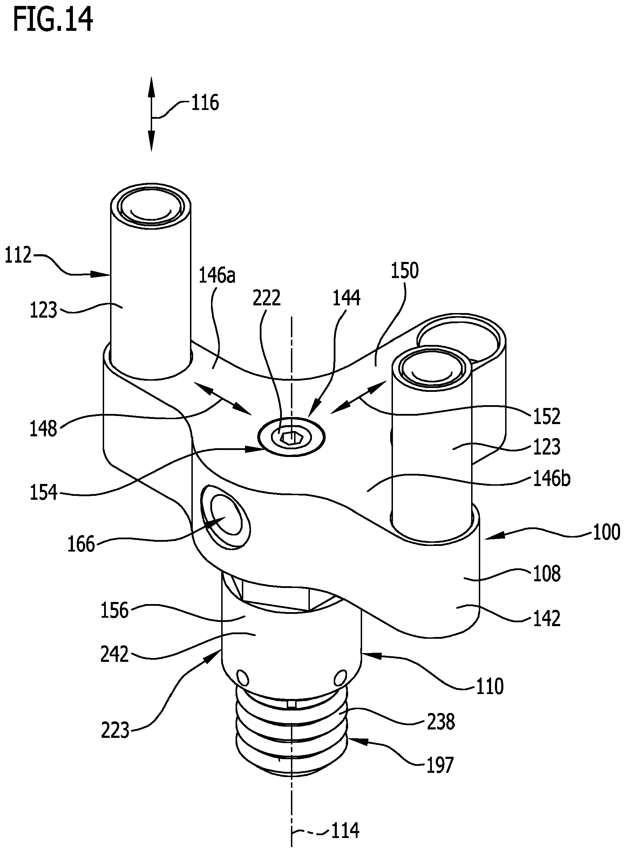

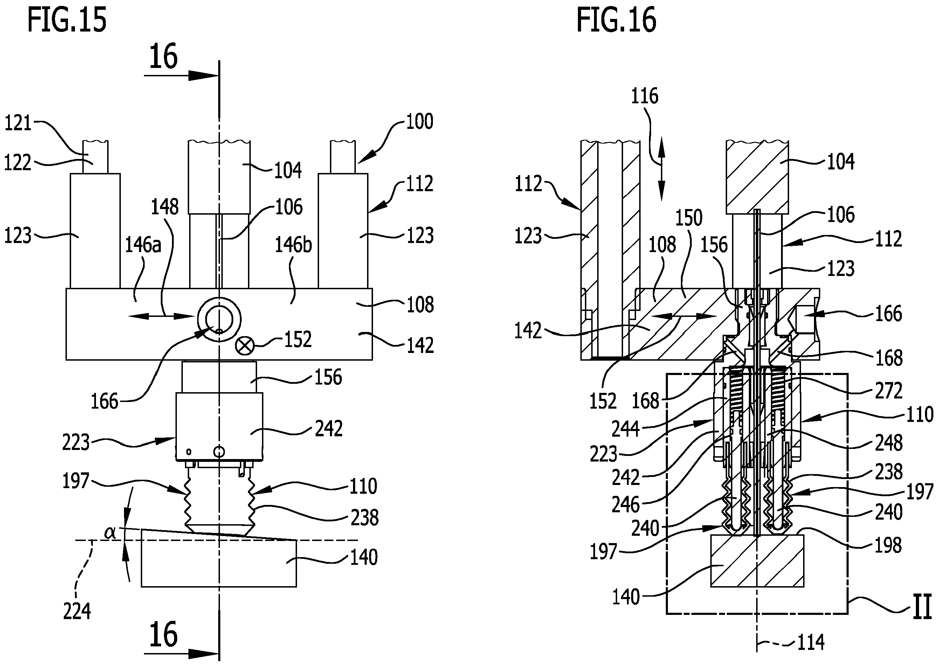

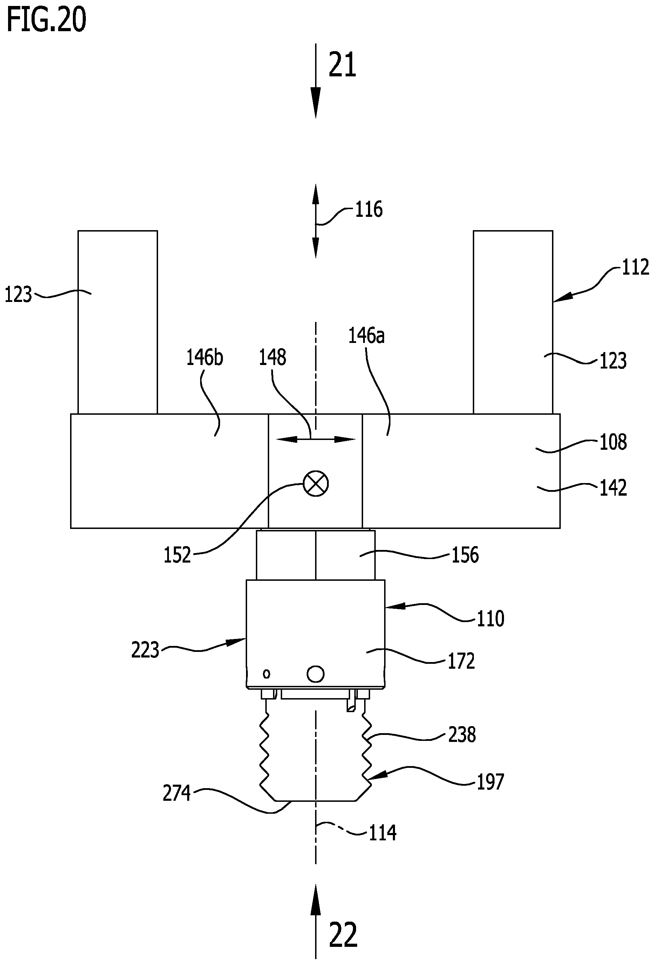

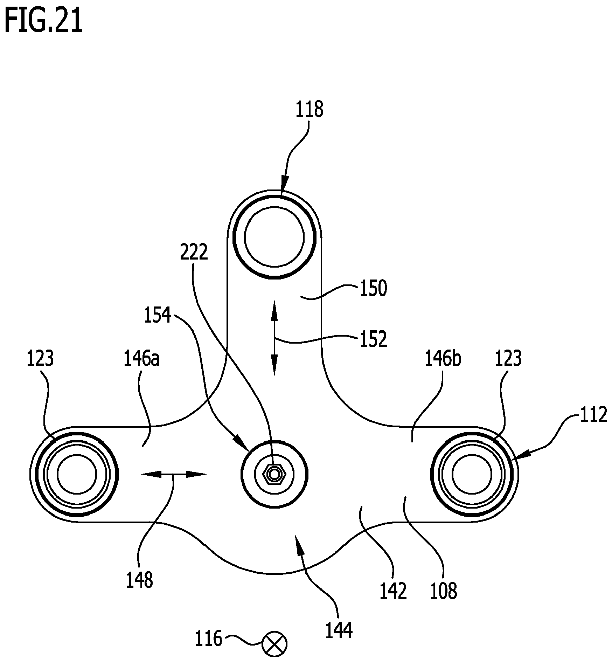

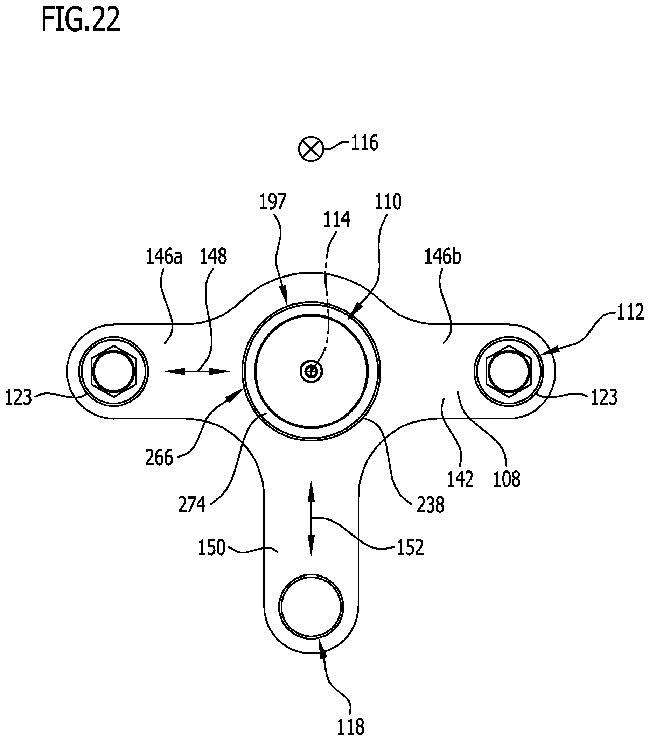

Eine in den Fig. 14 bis 22 dargestellte zweite Ausführungsform einer Drucckammer 110 für eine Funkenerodiermaschine 100 unterscheidet sich von der in den Fig. 1 bis 13 dargestellten ersten Ausführungsform dadurch, dass die Dichtung 197 der Druckkammer 110 statt eines mittels zweier Kugelgelenke 184, 194 verkippbar gelagerten Dichtelements 196 einen Faltenbalg 238 umfasst, welcher durch federgelagerte Andrückelemente 240 stabilisiert und gegen die Anlagefläche 198 des zu behandelnden Werkstücks 140 drückbar ist (siehe insbesondere die Fig. 16, 17 und 19).

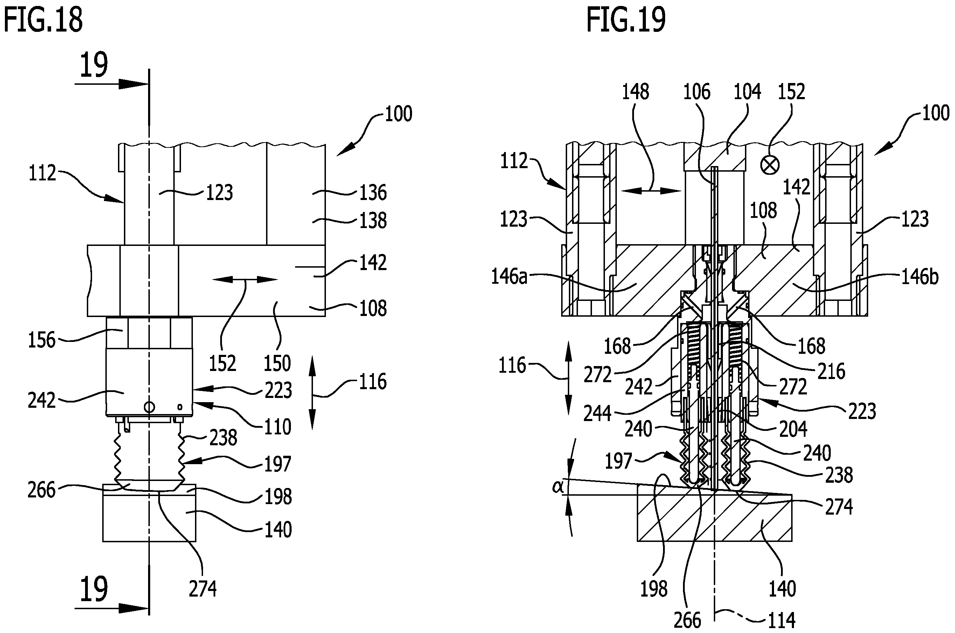

Wie am besten aus den Fig. 16 und 19 zu ersehen ist, umfasst das Basisteil 156 der Druckkammer 110 bei dieser Ausführungsform statt eines durchmesserreduzierten Abschnitts 172 und eines Kopfabschnitts 174 einen hohlzylindrischen Abschnitt 242, welcher an seinem im Betrieb der Funkenerodiermaschine 100 dem zu behandelnden Werkstück 140 zugewandten Ende offen ist.

In den Innenraum des hohlzylindrischen Abschnitts 242 des Basisteils 156 ist eine Führungshülse 244 eingesetzt, welche eine hohlzylindrische Außenwand 246, die an der Innenseite des hohlzylindrischen Abschnitts 242 des Basisteils 156 anliegt, und eine konzentrisch zu der Außenwand 146 ausgebildete hohlzylindrische Innenwand 248 umfasst.

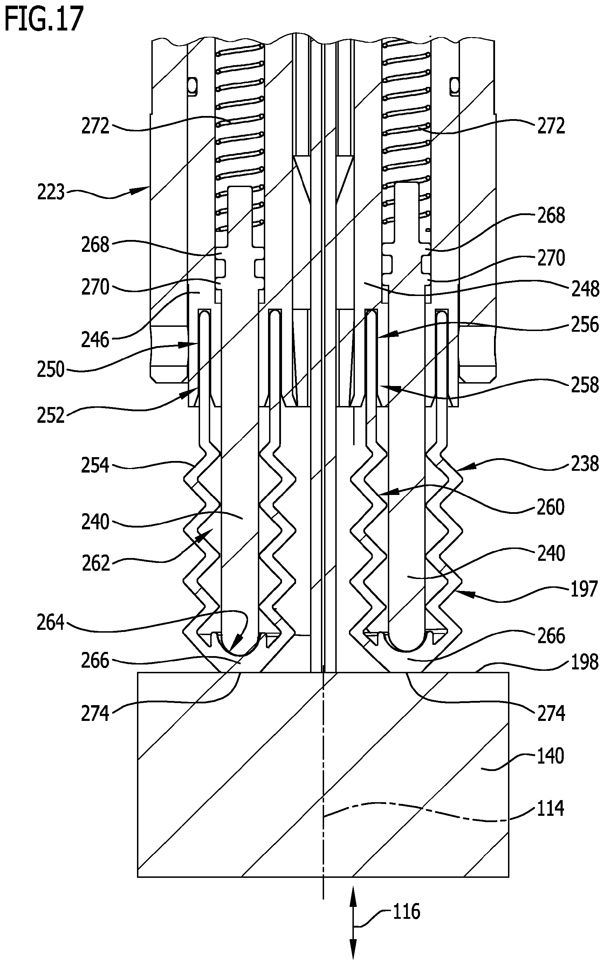

Wie am besten aus Fig. 17 zu ersehen ist, ist die Außenwand 246 der Führungshülse 244 an ihrem dem Grundkörper 142 der Druckkammereinheit 108 abgewandten Ende mit einer Aufnahmenut 250 zur Aufnahme eines Endabschnitts 252 einer Außenwand 254 des Faltenbalgs 238 versehen.

Die Innenwand 248 der Führungshülse 244 ist an ihrem dem Grundkörper 142 der Druckkammereinheit 108 abgewandten Ende mit einer Aufnahmenut 256 zur Aufnahme eines Endbereichs 258 einer Innenwand 260 des Faltenbalgs 238 versehen.

Die den Faltenbalg 238 stabilisierenden Andrückelemente 240, die beispielsweise als Andrückstifte ausgebildet sind, erstrecken sich aus dem Zwischenraum zwischen der Außenwand 246 und der Innenwand 248 der Führungshülse 244 parallel zu der Längsachse 114 der Druckkammer 110 in den von der Außenwand 254 und der Innenwand 260 des Faltenbalgs 238 umgebenen Innenraum 262 des Faltenbalgs 238 hinein.

Ein Ende jedes Andrückelements 240 ist in einer Aufnahmemulde 264 aufgenommen, welche an die Innenseite des Faltenbalgs 238 angeformt ist und in den Innenraum 262 des Faltenbalgs 238 vorsteht.

Auf diese Weise sind die Andrückelemente 240 reibschlüssig und/oder stoffschlüssig mit einem Abdichtbereich 266 verbunden, welcher die Außenwand 254 und die Innenwand 260 des Faltenbalgs 238 miteinander verbindet und während eines Funkenerosionsprozesses an der Anlagefläche 198 des zu behandelnden Werkstücks 140 fluiddicht abdichtend anliegt.

Die Andrückelemente 240 sind vorzugsweise längs der Umfangsrichtung des Faltenbalgs 238 äquidistant voneinander verteilt.

Vorzugsweise sind mindestens drei, insbesondere mindestens vier, besonders bevorzugt mindestens sechs, Andrückelemente 240 vorgesehen.

Wie am besten aus Fig. 17 zu ersehen, kann jedes Andrückelement 240 mit einem maschinenseitigen Bund 268 und mit einem werkstückseitigen Bund 270 versehen sein.

Der maschinenseitige Bund 268 und/oder der werkstückseitige Bund 270 können in eine Führungsnut an der Außenwand 246 und/oder in eine Führungsnut an der Innenwand 248 der Führungshülse 244 eingreifen, so dass das Andrückelement 240 parallel zur Längsachse 114 der Druckkammer 110 verschiebbar an der Führungshülse 244 geführt ist.

Jedem Andrückelement 240 ist jeweils ein Vorspannelement 272 zugeordnet, welches das jeweils zugeordnete Andrückelement 240 gegen den Abdichtbereich 266 des Faltenbalgs 238 vorspannt.

Jedes Vorspannelement 272 kann beispielsweise als ein Federelement, besonders bevorzugt als eine Druckschraubenfeder, ausgebildet sein.

Wie am besten aus den Fig. 16 und 19 zu ersehen ist, stützt sich jedes Vorspannelement 272 einerseits an dem Basisteil 156 der Druckkammer 110 und andererseits an dem maschinenseitigen Bund 268 des jeweils zugeordneten Andrückelements 240 ab.

Der werkstückseitige Bund 270 des Andrückelements 240 dient als ein Anschlag, welcher den Verschiebeweg des Andrückelements 240 von dem Grundkörper 142 der Druckkammereinheit 108 weg begrenzt.

Auch bei dieser Ausführungsform der Druckkammer 110 umfasst die Drucckammer 110 eine maschinenseitige Elektrodenführung 216 und eine werkstückseitige Elektrodenführung 204, durch welche sich im Betrieb der Funkenerodiermaschine 100 die Elektrode 106 hindurch erstreckt.

Der Faltenbalg 238 begrenzt den Innenraum 170 der Druckkammer 110, welcher einen Teil des Dielektrikumsraums 226 bildet, der während des Funkenerosionsprozesses mit dem Dielektrikum befüllt ist.

Im unbelasteten Ausgangszustand der Druckkammer 110, in welchem der Faltenbalg 238 noch nicht in Kontakt mit dem zu behandelnden Werkstück 140 steht, stehen die mittels der Vorspannelemente 272 vorgespannten Andrückelemente 240 maximal über die Führungshülse 244 über.

Wenn die Druckkammer 110 durch Bewegung der Maschinenspindel 104 an die Anlagefläche 198 des Werkstücks 140 herangefahren wird, so werden diejenigen Andrückelemente 240, in deren Bereich der Faltenbalg 238 zuerst in Kontakt mit der Anlagefläche 198 des Werkstücks 140 kommt, zuerst gegen die elastische Rückstellkraft des jeweils zugeordneten Vorspannelements 272 in die Führungshülse 244 hinein geschoben, so dass die Dichtfläche 274 des Abdichtbereichs 266 des Faltenbalgs 238 sich an die Anlagefläche 198 des Werkstücks 140 anschmiegt, um eine fluiddichte Abdichtung zu bilden.

Dies gilt auch dann, wenn die Anlagefläche 198 des Werkstücks 140 gegenüber einer zur Längsachse 114 der Druckkammer 110 senkrechten Ebene 224 um einen Winkel α geneigt ist und/oder wenn die Anlagefläche 198 nicht eben, sondern konvex oder konkav gekrümmt ausgebildet ist.

Wenn die durch den Faltenbalg 238 gebildete Dichtung 197 der Druckkammer 110 fluiddicht abdichtend an der Anlagefläche 198 des Werkstücks 140 anliegt, kann eine Durchströmung des Dielektrikumsraums 226 mit dem über den Dielektrikumanschluss 166 der Druckkammereinheit 108 zugeführten Dielektrikum beginnen, worauf dann der Funkenerosionsprozess mit inverser Druckspülung gestartet werden kann, welcher bereits vorstehend im Zusammenhang mit der ersten Ausführungsform einer Druckkammer 110 für eine Funkenerodiermaschine 100 beschrieben worden ist.

Im Übrigen stimmt die in den Fig. 14 bis 22 dargestellte zweite Ausführungsform einer Funkenerodiermaschine 100 und einer Druckkammer 110 hinsichtlich Aufbau, Funktion und Herstellungsweise mit der in den Fig. 1 bis 13 und 23 dargestellten ersten Ausführungsform überein, auf deren vorstehende Beschreibung insoweit Bezug genommen wird.

## Patentansprüche

1. Druckkammer für eine Funkenerodiermaschine (100) zur Durchführung einer funkenerosiven Behandlung an einem Werkstück (140) umfassend eine Wandung (223), welche einen Innenraum (170) der Druckkammer (110) begrenzt;
mindestens eine Elektrodenführung (204, 216) zur Führung einer Elektrode (106) parallel zu einer Längsachse (114) der Druckkammer (110);
einen Dielektrikumanschluss (166) zum Zuführen eines Dielektrikums zu dem Innenraum (170) der Druckkammer (110); und
eine Dichtung (197), welche an eine quer zur Längsachse (114) der Druckkammer (110) ausgerichtete Anlagefläche (198) des zu behandelnden Werkstücks (140) fluiddicht anlegbar ist.

2. Druckkammer nach Anspruch 1, **dadurch gekennzeichnet, dass** die Dichtung (197) ein elastomeres Dichtelement (196) zum Anschmiegen an die Anlagefläche (198) des zu behandelnden Werkstücks (140) umfasst.

3. Druckkammer nach einem der Ansprüche 1 oder 2, **dadurch gekennzeichnet, dass** die Druckkammer (110) mindestens ein Kugelgelenk (184, 194) umfasst.

4. Druckkammer nach einem der Ansprüche 1 bis 3, **dadurch gekennzeichnet, dass** die Druckkammer (110) einen Faltenbalg (238) umfasst.

5. Druckkammer nach einem der Ansprüche 1 bis 4, **dadurch gekennzeichnet, dass** die Dichtung (197) mindestens ein Andrückelement (240) umfasst, mittels welchem ein Abdichtbereich (266) der Dichtung (197) gegen die Anlagefläche (198) des zu behandelnden Werkstücks (140) drückbar ist.

6. Druckkammer nach Anspruch 5, **dadurch gekennzeichnet, dass** die Druckkammer (110) mindestens ein elastisches Vorspannelement (272) zum Vorspannen des mindestens einen Andrückelements (240) gegen den Abdichtbereich (266) umfasst.

7. Druckkammer nach einem der Ansprüche 1 bis 6, **dadurch gekennzeichnet, dass** mindestens eine der mindestens einen Elektrodenführung (204) mindestens einen Durchtrittskanal (208) für den Durchtritt des Dielektrikums durch die betreffende Elektrodenführung (204) aufweist.

8. Druckkammer nach Anspruch 7, **dadurch gekennzeichnet, dass** der mindestens eine Durchtrittskanal (208) im Wesentlichen parallel zu der Längsachse (114) der Druckkammer (110) ausgerichtet ist.

9. Druckkammer nach einem der Ansprüche 1 bis 8, **dadurch gekennzeichnet, dass** mindestens eine der mindestens einen Elektrodenführung (204, 216) der Druckkammer (110) aus einem Keramikmaterial, aus einem Kunststoffmaterial oder aus einem mit einer elektrisch nicht leitenden Beschichtung versehenen metallischen Material gebildet ist.

10. Druckkammer nach einem der Ansprüche 1 bis 9, **dadurch gekennzeichnet, dass** mindestens eine der mindestens einen Elektrodenführung (216) der Druckkammer (110) fluiddicht ausgebildet ist.

11. Druckkammer nach einem der Ansprüche 1 bis 10, **dadurch gekennzeichnet, dass** die Wandung (223) der Druckkammer (110) ein Kunststoffmaterial und/oder ein metallisches Material umfasst.

12. Druckkammer nach einem der Ansprüche 1 bis 11, **dadurch gekennzeichnet, dass** die Druckkammer (110) mindestens ein Führungselement (121) zum verschieblichen Führen der Druckkammer (110) längs einer Führungsrichtung (116) an einer Führungsvorrichtung (112) der Funkenerodiermaschine (100) umfasst.

13. Druckkammer nach Anspruch 12, **dadurch gekennzeichnet, dass** die Führungsrichtung (116) parallel zu der Längsachse (114) der Druckkammer (110) ausgerichtet ist.

14. Verwendung der Druckkammer (110) nach einem der Ansprüche 1 bis 13 als Bestandteil einer Funkenerodiermaschine (100), wobei eine hohle Elektrode (106) sich durch den Innenraum (170) der Druckkammer (110) hindurch erstreckt und dem Innenraum (170) der Druckkammer (110) ein Dielektrikum zugeführt wird, welches bei einer funkenerosiven Behandlung eines Werkstücks (140) verwendet wird.

15. Verwendung der Druckkammer (110) nach Anspruch 14, wobei das Dielektrikum durch die hohle Elektrode (106) abgeführt wird.
